(19) Europäisches Patentamt
European Patent Office
Office européen des brevets

(11) **EP 2 846 131 A1**

(12) **EUROPEAN PATENT APPLICATION**

(43) Date of publication:
**11.03.2015  Bulletin 2015/11**

(51) Int Cl.:
**G01C 9/10** *(2006.01)*　　*G01C 9/06* *(2006.01)*
**G01C 9/24** *(2006.01)*

(21) Application number: **13306223.2**

(22) Date of filing: **06.09.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Chambre de Commerce et d'Industrie
de Région Paris
Ile de France (ESIEE Paris)
93162 Noisy-le-Grand (FR)**

(72) Inventors:
• **Angelescu, Dan**
  **94170 LE PERREUX-SUR-MARNE (FR)**
• **Wahl, Sebastian**
  **78860 SAINT NOM LA BRETECHE (FR)**

(74) Representative: **Regimbeau**
**20, rue de Chazelles
75847 Paris Cedex 17 (FR)**

(54) **INCLINOMETER OF IMPROVED PRECISION AND MANUFACTURING METHOD THEREOF**

(57)　　The invention concerns an inclinometer (10) comprising:
- a curved surface (12),
- a mobile element (11) on said curved surface, such that an inclination of the inclinometer (10) causes a displacement of the mobile element (11) on the curved surface (12), and
- a position sensor (13) adapted to detect a position of said mobile element (11) on said curved surface (12),

the inclinometer being characterized in that said curved surface (12) is obtained by the deflection of a membrane under exposure to a differential pressure between one side of said membrane and the opposite side of said membrane, said opposite side being exposed to atmospheric pressure.

The invention also concerns a method for manufacturing such an inclinometer.

FIG. 1b

**Description**

TECHNICAL FIELD OF THE INVENTION

The invention relates to the field of inclinometers, comprising a mobile element relative to a fixed curved surface, the position of the mobile element on the curved surface being detected to infer the tilt of the inclinometer.

The invention can in particular be implemented for controlling the tilt of civil engineering works.

BACKGROUND ART

Various inclinometers are known, of the type comprising a mobile element on a curved surface, the movement of the mobile element being monitored to infer an inclination angle of the inclinometer.

To understand the operation of such inclinometers it is useful to make reference to a spherical coordinate system, where the position of a point is specified by three numbers: the radial distance of that point from a fixed origin, its polar angle measured from a fixed zenith direction (for the purposes of this description we will consider this to be the axis of gravity, or the vertical direction), and the azimuthal angle of its orthogonal projection on a reference plane that passes through the origin and is orthogonal to the zenith (thus, a horizontal plane), measured from a fixed reference direction on that plane. For inclinometry purposes, the radial coordinate is not important, the inclination being characterized by the polar angle (giving the total inclination of a structure relative to the vertical direction) and the azimuthal angle (giving the direction in the horizontal plane corresponding to this inclination). To completely characterize the inclination of a structure, two coordinates are therefore required.

Inclinometers are either mono-axial, meaning that they detect only one coordinate, typically corresponding to the inclination within a plane that is fixed relative to the inclinometer, or biaxial, meaning that they detect both coordinates and can infer the polar and the azimuthal angle. When monitoring inclination in civil engineering works, two mono-axial inclinometers measuring the inclination on orthogonal axes are typically employed. Alternatively, a single bi-axial inclinometer can be substituted for the two mono-axial inclinometers.

An example of mono-axial inclinometer is for instance presented in document EP 0 809 786, which discloses an inclinometer comprising a mobile element on a V-shaped track, the mobile element being able to move in only one direction. Two position detectors are placed at two ends of the track, each detector comprising a light emitter and a light receiver. The mobile element being opaque, it interrupts the light when positioned between a light emitter and the corresponding light receiver.

Thus, when the inclinometer is inclined of a sufficient angle, the mobile element rolls on the track until it reaches a position detector, thus interrupting the light, and launching a signal.

Therefore said inclinometer is only able to detect an extreme angle of the inclinometer, in only one direction, since the mobile element can only move in one axis. Said inclinometer is thus not bi-axial, meaning that it alone cannot give a complete description of the inclination of a given structure.

It is also known from document JP 2011 69798 an inclinometer comprising a mobile sphere-shaped lens on a curved transparent surface. The lens and the surface are interposed between a light emitter and a light receiver. The lens deflects the light according to a known trajectory, and the light receiver can detect the position of the received light within the receiver plane and infer, from this position, the position of the lens on the curved surface and hence the tilt of the inclinometer. This inclinometer can hence provide the indication of a biaxial tilt.

It is known from document JP 2006 317171 an inclination sensor comprising a light emitter and a light receiver, between which is interposed a transparent curved surface on which a mobile light-shielding ball is disposed.

The position of the light-shielding ball on the curved surface varies according to the inclination of the inclination sensor. The light receiver receives the light emitted by the emitter except for the part of the light that is blocked by the ball.

The detection of the position of the shadow projected by the ball on the light receiver allows determining the position of the ball on the curved surface and then the inclination of the sensor.

In order to infer the inclination of the sensor from the position of the ball on the curved surface, one has to know precisely the geometry of the curved surface, in particular for controlling the tilt of precise works. Similarly, the state of the surface (its roughness, surface energy, chemical nature) needs to be well controlled, since it can affect to a significant extent the precision of such a measurement.

This is not the case in the inclination sensors of the two previously presented documents, so that the precision of the tilt measured with this kind of sensors may be insufficient for precision measurements.

There is therefore a need for a bi-axial inclinometer which would provide inclination measurements with an increased precision, and which can be adapted to various measurement ranges.

## SUMMARY OF THE INVENTION

Thus, one object of the invention is to provide a bi-axial inclinometer of improved precision.

Another object of the invention is to provide an inclinometer of the type comprising a mobile element on a curved surface, the geometry of which is precisely determined to allow inferring precisely the inclination of the inclinometer from the position of the element on the surface.

Another objet of the invention is to provide a cheap inclinometer that has great sensitivity on all its measurement range.

Another objet of the invention is to provide an inclinometer which measurement range can be adjusted by varying some design parameters.

According to the invention, an inclinometer is provided, comprising:

- a curved surface,
- a mobile element on said curved surface, such that an inclination of the inclinometer causes a displacement of the mobile element on the curved surface, and
- a position sensor adapted to detect a position of said mobile element on said curved surface,

the inclinometer being **characterized in that** said curved surface is obtained by the deflection of a membrane under exposure to a differential pressure between one side of said membrane and the opposite side of said membrane, said opposite side being exposed to atmospheric pressure.

In some embodiments, the inclinometer according to the invention can further comprise the following features:

- The inclinometer comprises a cavity on one side of the membrane, within which a pressure is below atmospheric pressure.
- The membrane essentially consists of silicon, glass, sapphire, alumina or metal.
- The inclinometer further comprises a data processing module adapted to compute an inclination angle of the said inclinometer from the detected position of the said mobile element on the said curved surface and the atmospheric pressure.
- The mobile element is a solid ball, a liquid droplet or a gas bubble.
- The inclinometer comprises a light emitter, wherein the position sensor comprises a light receiver, the curved surface being transparent to the emitted light and being interposed between the light emitter and the light receiver, and the mobile element being opaque to the emitted light so as to interrupt the light and project a shadow on the light receiver, and wherein the data processing module is configured for determining, from a position of the projected shadow on the light receiver, a position of the mobile element on the curved surface and an inclination angle of the inclinometer.
- The light emitter and the light receiver are respectively adapted to emit and detect infrared light.
- The inclinometer comprises a light emitter, wherein the position sensor comprises a light receiver, the curved surface being transparent to the emitted light and being interposed between the light emitter and the light receiver, and the mobile element forming a lens transparent to the emitted light so as to modify the trajectory of light and the pattern of light projected on the light receiver, and wherein the data processing module is configured for determining, from the pattern of light detected on the light receiver, a position of the mobile element on the curved surface and for deducing an inclination angle of the inclinometer.
- The light receiver is chosen among group consisting of: a quadrant photodetector type, a lateral effect position sensitive detector, a linear position sensor module, a CCD camera, or a CMOS camera.
- The position sensor comprises a resistive position sensor or a capacitive position sensor, and is adapted to electrically detect the position of the mobile element on the curved surface.
- The inclinometer further comprises a pressure sensor adapted to measure an atmospheric pressure around the inclinometer.

According to the invention, there is also provided a method of manufacturing an inclinometer, the method comprising steps of:

- etching a substrate to form a cavity and a membrane in said substrate, the membrane having a surface,
- bonding a layer over said substrate in order to seal said cavity between the glass layer and the membrane of the etched substrate, said bonding being carried out in an apparatus in which the pressure is maintained at a predetermined value below atmospheric pressure, in order to set the pressure within the cavity to said predetermined value, and
- raising the pressure within the bonding apparatus to reach atmospheric pressure, the differential pressure between the cavity and the atmospheric pressure causing the membrane to deflect into the cavity.

In some embodiments, the method of manufacturing an inclinometer can further comprise at least one of the following features:

- it can further comprise a step of structuring said membrane so as to form on its surface an array of structures with dimensions in the range from 10 nanometers to 50 micrometers, said structuring being achieved through the implementation of an etching process, or growth or deposition of a layer of carbon nanotubes.
- It can further comprise a step of depositing on the membrane a solid low-surface-energy layer or a low-vapor-pressure liquid layer.

A method of computing an inclination angle of an inclinometer according to the previous presentation is also provided, comprising the steps of:

- assessing the atmospheric pressure around the inclinometer,
- determining the geometry of the curved surface according to said atmospheric pressure,
- detecting the position of the mobile element on the curved surface, and
- inferring, from said position and said geometry of the curved surface, an inclination angle of the inclinometer.

An inclinometer obtained through implementation of said method is also provided.

The inclinometer according to the invention allows measuring a tilt with improved precision, whatever the direction of said tilt. Indeed, the inclinometer is bi-axial, as the mobile element can move on the curved surface in any direction. Both the polar and the azimuthal inclination angles can therefore be computed.

Moreover, the possibility to control and adapt with high accuracy the geometry of the curved surface by using microfabrication technologies results in a highly-controlled deflection of the membrane and in a very smooth surface, which in turn results in highly accurate inclination angles measurements.

This accuracy can be further improved if the curved surface and the mobile element are adapted to lower the potential frictions and hysteresis between them, for instance if the mobile element is a droplet of polar liquid and the curved surface is chemically or structurally treated to minimize the contact angle hysteresis with such liquid.

The inclinometer according to the invention can further be implemented in numerous ways, for instance via optical or electrical position detectors, making it easy and cheap to manufacture.

Last, according to the design parameters of the inclinometer, it can be adapted to various ranges of measurements, which allows using it for various applications.

BRIEF DESCRIPTION OF THE DRAWINGS

The features and advantages of the invention will be apparent from the following more detailed description of certain embodiments of the invention and as illustrated in the accompanying drawings, in which:

- Figures 1a and 1b schematically show an inclinometer according to one embodiment of the invention, in two different positions.
- Figure 1c schematically represents an inclinometer according to another embodiment of the invention,
- Figures 2a to 2h show the processing steps for creating a curved surface used in an inclinometer according to one embodiment of the invention,
- Figures 3a to 3c represent various surface treatments of the membrane of an inclinometer.
- Figure 4 represents an example of a resistive position detector that can be used in an inclinometer according to one embodiment of the invention.

DETAILED DESCRIPTION OF A PREFERRED EMBODIMENT OF THE INVENTION

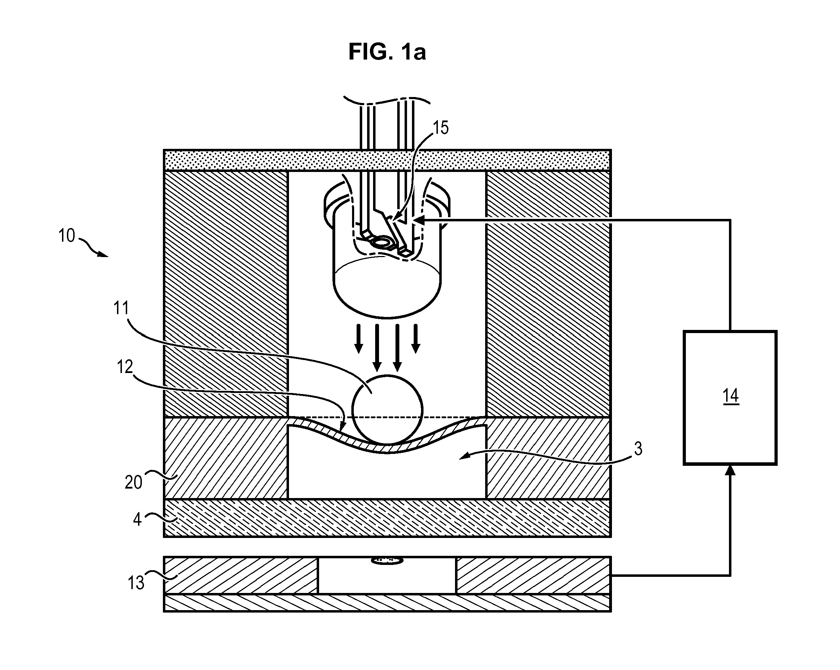

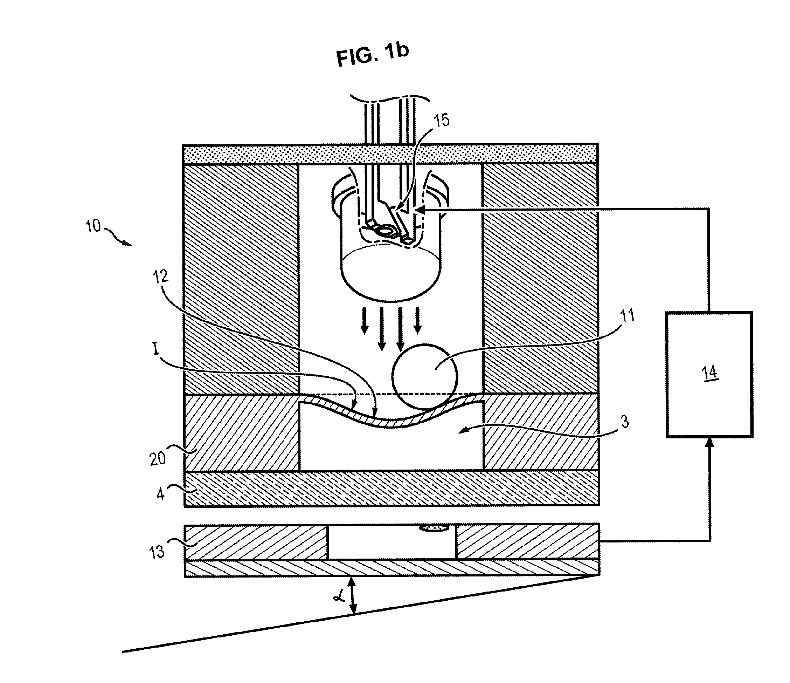

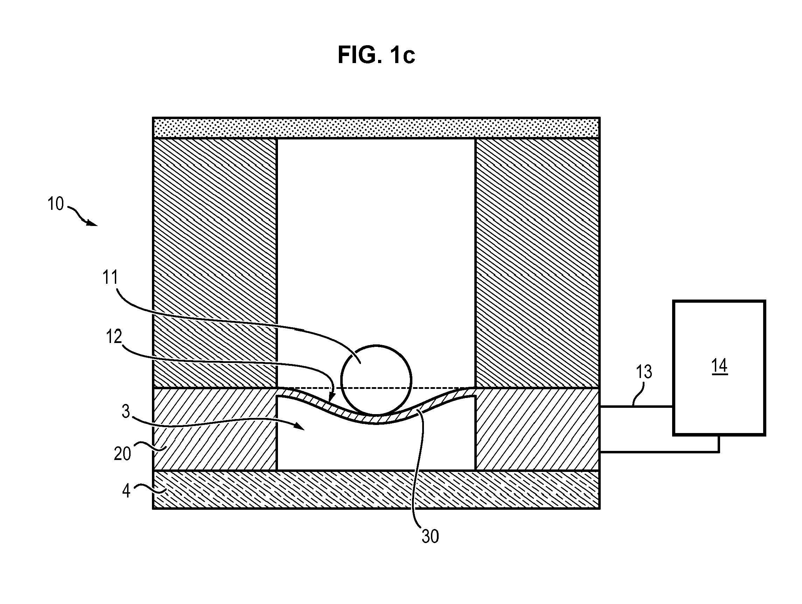

With reference to figures 1a and 1b, an inclinometer 10 according to one embodiment of the invention is shown.

The inclinometer comprises an element 11, disposed on a curved surface 12 and mobile relative to said surface. The mobile element 11 is preferably a spherical element in order to be able to roll across the curved surface.

The mobile element 11 can be either solid or fluidic. It can be a solid ball, a droplet of liquid or a bubble of gas.

In any case, the mobile element 11 and the curved surface 12 are adapted to lower the frictions and contact angle hysteresis between them.

For instance, if the mobile element 11 is a liquid droplet, such as a droplet of water or of mercury, the curved surface is preferably physically and chemically treated to render it superhydrophobic.

If the mobile element 11 is a solid ball, the curved surface may not be treated.

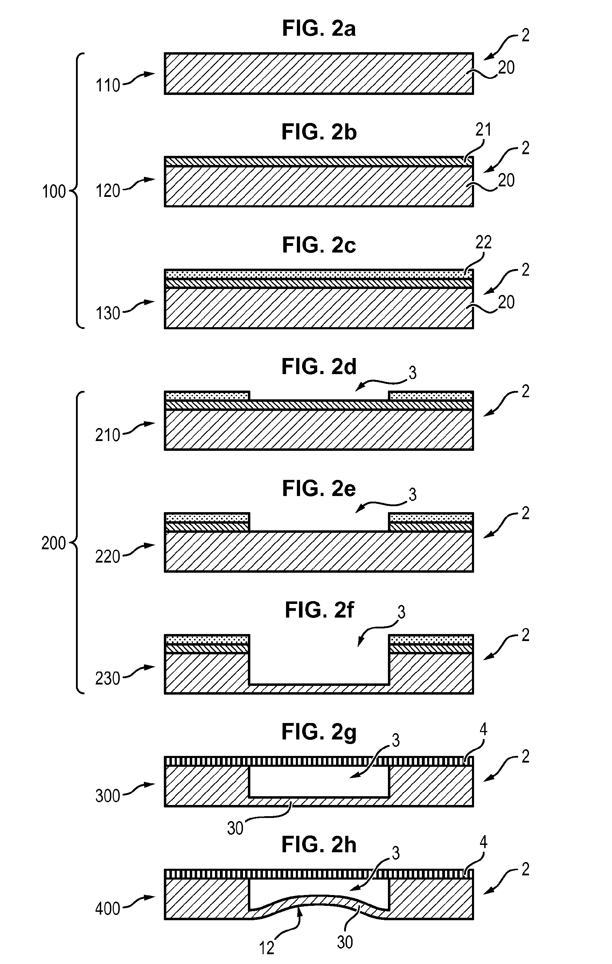

The curved surface 12 is fixed to the inclinometer 10, so that an inclination of the inclinometer causes the curved surface to be inclined of the same angle, as shown on figure 2b with an angle α. Said inclination of the curved surface causes itself a displacement of the mobile element 11 on the curved surface.

The inclinometer 10 further comprises a position sensor 13, able to determine the position of the mobile element 11 on the curved surface 12, and a data processing module 14, for instance a processing unit, connected to the position sensor 13, and configured to compute, from the detected position of the mobile element 11 on the curved surface, the inclination angles (both polar and azimuthal) of the curved surface, and hence of the inclinometer.

In another embodiment the inclinometer can be connected to an independent data processing module.

The inclinometer 10 also comprises a cavity 3 within which the pressure is lower than the atmospheric pressure surrounding the inclinometer. This cavity is obtained by sealing it in a bonding process, while the pressure of the bonding chamber is lower than atmospheric pressure. The pressure in the cavity 3 reaches a predetermined, desired pressure essentially determined by the parameters of the bonding process.

One wall of said cavity according to one embodiment of the present invention, is a silicon membrane 30 formed by etching the cavity 3 within a base layer made of silicon 20, the membrane being deflected within the cavity when the pressure within said cavity is lower than the surrounding pressure. The membrane is thus deflected within the cavity and forms, on its surface outside the cavity 3, the curved surface 12, as mentioned in further details below, whereas the opposite wall of the cavity is a substrate 4 to which the base layer is bonded to during the aforementioned bonding process.

The membrane may be made out of glass, or out of other types of non-permeable materials such as sapphire, alumina, or metal. Hence, in an embodiment of the present invention, the membrane is essentially consisting of silicon, glass, sapphire, alumina or metal

In a preferred embodiment of the present invention, the membrane is essentially consisting of silicon.

By "essentially consisting of", it is herein referred to a membrane comprising mainly said element, preferably more than 95 % and more preferably more than 99 %. For example, a membrane essentially consisting of silicon encompasses a doped silicon membrane such as n-doped or p-doped membrane and thus can comprise boron, phosphorus, arsenic, or antimony. A membrane essentially consisting of silicon encompasses also silicon dioxide.

With reference to figures 2a to 2h, exemplary steps for manufacturing a curved surface are shown. This is just an exemplary process capable to produce a device of the type described in this invention, but a person skilled in the art will recognize that many different processes, substrate types and materials can be used to produce devices with characteristics according to the present invention.

On figure 2a, a first step 100 consists in preparing a substrate 2, said substrate comprising a silicon wafer 20 as a base layer, which is highly uniform in thickness and polished on both sides. Typical values of thickness variation are less than 1 micron across the full wafer. Such substrates are commonplace in the microelectronics and microfabrication industries, and can be supplied by a large number of vendors, the substrates having precisely controlled and uniform thickness ranging from 10 to 1000microns, and surface roughness close to the atomic scale. The surface RMS roughness is typically lower than 0,5nm.

Alternatively, the base layer can consist of a layered material such as silicon-on-insulator (SOI) wafer, consisting of two silicon layers, separated by a silicon oxide layer and bonded together. The two layers, called the handle layer and the device layer, are both of precisely controlled and uniform thickness and low surface roughness. The base layer can also consist of glass-on-silicon wafers, consisting of a thin layer of glass bonded to a layer of silicon.

A first substep 110 is the preparation of said base layer (figure 2a), and is optionally followed by a second substep 120 (figure 2b), during which the silicon base layer 20 is covered by a masking layer 21 of aluminum by a process of sputtering, evaporation, atomic layer deposition, chemical vapor deposition or similar, and a third substep 130 (figure 2c) during which said aluminum layer 21 is itself covered with a photoresist layer 22, by a process of spincoating, spraycoating, flowcoating or lamination.

Alternatively, the first substep 110 is followed by the substep 130 of depositing the photoresist layer 22.

A second step 200 comprises etching the substrate 2 in order to form a cavity 3 in said substrate thus extending through the photoresist layer 22 and the aluminum layer 21, and extending partially into the base layer 20.

Preferably, this etching step comprises a first substep 210 of preparation of the substrate, which comprises the positioning of a mask, which contains patterns having the shape and size of the section of the cavity to create, on top of the photoresist layer 22 and the exposure of the photoresist through the mask, followed by a chemical development to obtain the desired patterns on the photoresist layer (figure 2d).

Preferably, the cavity has a circular cross-section, and the mask thus also has circular patterns.

Then, during a substep 220, the optional aluminum layer, precisely at the patterns where the photoresist layer has been removed through the photolithography process in substep 210 is etched by chemical wet etching or by a dry plasma etch (figure 2e), leaving the bare base layer exposed where the patterns were present.

The next substep 230, on figure 2f, consists in etching the base layer 20 to create the cavity 3, by Deep Reactive Ion Etching or Reactive Ion Etching or chemical wet etching, until it only remains a membrane 30 of material of the desired thickness. In case the base layer was a silicon or SOI wafer, the membrane 30 will consist of silicon. If a glass-on-silicon wafer is used, the membrane will consist of glass.

This etching step results in a membrane 30, at the bottom of the cavity 3, which corresponds to the remainder of the base layer 20 after its etching. If a single material base layer is used (such as a silicon wafer), the thickness of the membrane 30 can be controlled according to the duration of the etching step.

This remaining thickness will greatly influence the membrane deflection and thus the measurement range of the resulting inclinometer. In case the base layer material is a layered material such as a SOI or glass-on-silicon wafer, the chemistry of the etching process can be adapted to be specific to one of the materials forming the base layer. For example, if a SOI wafer is used, the etch chemistry can be chosen to etch silicon but not silicon oxide, in which case the etching will automatically stop on the silicon oxide layer.

The thickness of the remaining layer is in this case purely determined by the characteristics of the SOI wafer, and can therefore be controlled much more precisely. Similarly, if a glass-on-silicon wafer is used, the etch chemistry can be chosen to etch silicon but not glass, in which case the etching will automatically stop on the glass layer, which will form the membrane.

Following the etching process the aluminum and photoresist layers may then be totally removed from the entire surface of the silicon base layer 20 by a combination of dissolution and etching processes, and, during a step 300 shown on figure 2g, an impermeable substrate 4 is bonded on the substrate 2, in order to seal the cavity 3 between the substrate and the membrane 30.

In case the base layer 20 is made of silicon, and the substrate 4 of glass, the bonding may be achieved by a process called anodic bonding. Other types of bonding processes exist such as, without limitation, eutectic bonding, adhesive bonding, fusion bonding, and the person skilled in the art will recognize that any of these processes can be used to manufacture the devices described in this invention.

During the bonding process, the bonding apparatus is vacuumed such that the pressure in the bonding apparatus is maintained and well controlled at a value that is lower than atmospheric pressure. This bonding process will ensure that the cavity 3, once bonded, will remain at this lower pressure. The lower this pressure, the more reliable the measurement since the effects of pressure changes within the cavity due to temperature changes are reduced. This lower pressure is ideally comprised between 1e-9 Bar and 0.01bar but the device can function with any cavity pressure lower than 1bar.

Last, with reference to figure 2h, during a step 400, the pressure within the bonding apparatus is finally raised to atmospheric pressure which causes the membrane 30 to be subjected to a differential pressure between the side facing the atmosphere and the side facing the cavity. This differential pressure causes the membrane 30 to deflect into the cavity 3, the surface of the membrane opposite the cavity 3 thus forming the curved surface 12 of the inclinometer.

Typical dimensions of the membrane may be: diameter between 1 mm and 20 mm, thickness between 1 micron and 100 microns. The relations between the mechanical membrane parameters, its thickness, diameter, and atmospheric and cavity pressure are important, as they determine the range of inclinations that the device is sensitive to. These relations are detailed further below.

The pressure difference between the cavity 3 and the atmospheric pressure surrounding the inclinometer is a parameter that allows determining with great precision the geometry of the thus deflected membrane. The pressure inside the cavity 3 being determined by the bonding process as described above, the inclinometer 10 can further comprise a pressure sensor (not shown), adapted to measure the atmospheric pressure of the medium in which it is placed.

The deflection of a solid circular membrane with its edges fixed to a support (here to the remainder of the base layer 20), with a uniformly distributed pressure, is given by the following equation [cf. W.C.Young, R.G. Budynas, A.M. Sadegh "Roark's formulas for stress and strain", 8th ed., McGraw Hill (2012)]:

$$y(r) = y_c + \frac{M_c . r^2}{2D . (1 + \upsilon)} + LT_y$$

With:

r: distance from the center of the membrane,
$y_c$: maximal deflection at the center of the membrane,
$M_c$: is the bending moment, given by $M_c = \Delta q.a^2.(1+\upsilon)/16$
$\upsilon$: Poisson's ratio
a: the membrane radius
$\Delta q$: the pressure difference between the atmospheric pressure and the cavity.
D is a constant of the membrane:

$$D = \frac{E_y . e^3}{12(1 - v^2)}$$

Where:

$E_y$: Young's modulus,
e: thickness of the membrane
and:

$$LT_y = -\frac{\Delta q r^4}{64D}$$

Then

$$y(r) = -\frac{\Delta q a^4}{64D} + \frac{\Delta q a^2 r^2}{32D} - \frac{\Delta q r^4}{64D}$$

For a given angle $\alpha$ with respect to a vertical axis, the mobile element remains in equilibrium at a location where the tangent plane to the membrane is orthogonal to the gravity, i.e. is horizontal. In the inclinometer frame of reference, this position corresponds to a point on the surface where the local inclination angle of the surface is equal to $\alpha$. The tangent of this angle is then given by the local first derivative of the surface deflection and the equilibrium condition is thus given as follows:

$$\frac{dy(r)}{dr} = \tan \alpha$$

$$\frac{dy(r)}{dr} = \frac{\Delta q a^2}{16D} r - \frac{\Delta q}{16D} r^3 = \tan \alpha$$

Thus, the detection of the position of the mobile element on the curved surface gives the distance of this element from the center of the membrane as well as its azimuthal angle, and then the polar and azimuthal inclination angles of the inclinometer can be determined with an important precision.

The range of angles that can be measured with this inclinometer also depends on the geometry of the membrane. Indeed, for a given section of the membrane from the center to the edge, if the mobile element is displaced further than the inflection point I of the membrane, it no longer remains in equilibrium on a particular point and moves until it leaves the membrane. The geometrical parameters of the membrane can hence be chosen according to a desired application of the inclinometer, in order to adapt its measurement range to said application.

The inflection point I (visible on figure 1b) thus corresponds to the maximum radius at which the mobile element can remain in equilibrium, and therefore corresponds to the maximum angle that can be measured by the inclinometer.

Said inflection point is given by the second derivative of the membrane deflection:

$$\frac{d(dy(r))}{dr^2} = \frac{\Delta q a^2}{16D} - \frac{3\Delta q}{16D} r^2 = 0$$

The maximum displacement relative to the center of the membrane corresponding to the inflexion point is given by the following equation:

$$r_{max} = \sqrt{\frac{a^2}{3}} = a\frac{\sqrt{3}}{3}$$

This allows determining the maximum inclination angle that can be detected as the mobile element still remains in equilibrium on the membrane:

$$\frac{d(y(r_{\max}))}{dr} = \frac{dy\left(\sqrt{\frac{a^2}{3}}\right)}{dr} = \frac{\Delta q a^2}{16D} \cdot \sqrt{\frac{a^2}{3}} - \frac{\Delta q}{16D} \cdot \sqrt[3]{\frac{a^2}{3}} = \frac{\Delta q a^3}{16D} \cdot \frac{\sqrt{3}}{3} - \frac{\Delta q a^3}{16D} \cdot \frac{\sqrt{3}}{9} = \tan \alpha_{max}$$

$$\frac{d(y(r_{\max}))}{dr} = \frac{\Delta q a^3}{16D} \cdot \left(\frac{\sqrt{3}}{3} - \frac{\sqrt{3}}{9}\right) = \frac{\Delta q a^3}{16D} \cdot \left(\sqrt{3} \cdot \frac{2}{9}\right) = \tan \alpha_{max}$$

And

$$\alpha_{max} = \arctan\left(\frac{\sqrt{3}}{72} \cdot \frac{\Delta q a^3}{D}\right) = \arctan\left(\frac{\sqrt{3}}{6} \cdot \frac{\Delta q a^3 (1 - v^2)}{E_y \cdot e^3}\right)$$

The data processing module 14 is thus adapted to compute the inclination angle of the inclinometer, by acquiring the value of the atmospheric pressure to compute, from the known value of the cavity pressure, the pressure difference between the two pressures, as well as the position of the mobile element on the curved surface. Then, from the implementation of the above equations, it can infer the inclination angle of the inclinometer.

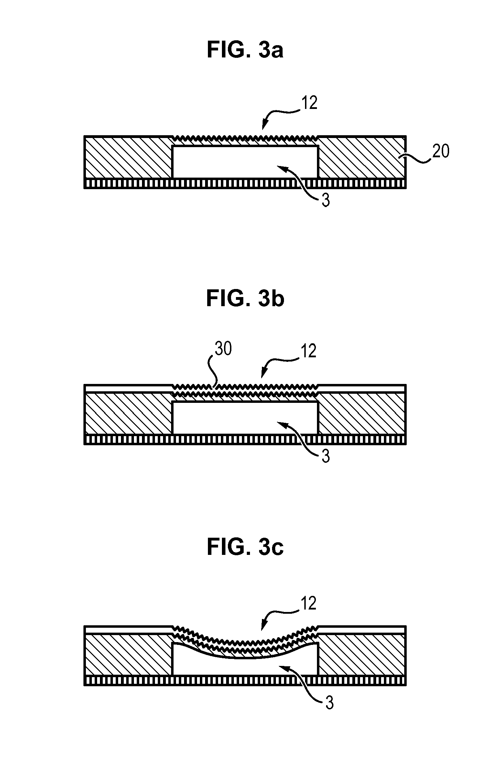

With reference to figures 3a to 3c, an optional step 500 aiming at lowering the potential frictions and hysteresis between friction between the surface and the mobile element. This step can comprise nanostructuring the surface, as shown in figures 3a and 3c.

Nanostructuring can be achieved by a variety of means. Etching using a mask can result in arrays of pillars of micrometric and nanometric dimensions. One can use a lithographic process using a regular lithography mask, or a bottom-up process using a self-assembled mask, as can be obtained using processes based on diblock copolymers.

Maskless nanostructuring techniques exist as well, such as producing black silicon for example, which is obtained through cryogenic reactive ion etching or laser ablation.

Nanostructuring can also be obtained by growth techniques, such as growth of carbon nanotubes on the curved surface 12. The person skilled in the art will realize that any of the known structuring techniques, including but not limited to those listed above, can be used to generate a topographical pattern on the curved surface 12, at nanometric or micrometric scales.

With reference to figure 3b, the step 500 may further imply chemically treating the surface, such as depositing a low-surface-energy solid layer on the surface (teflon or another perfluorinated solid compound for example).

Step 500 may imply treating the surface with a low surface energy liquid, which may be trapped by capillarity within the surface structure. Such a liquid may be chosen to have a low surface energy, and low vapor pressure. Examples of such liquids are certain perfluorinated solvents such as those commercialized under the Krytox or Fluorinert brand name.

This step of chemically treating the surface 12 can be carried out in addition or in replacement of the nanostructuring step.

Preferably, said step 500 is carried out between the step of figure 2g, at which the cavity is sealed between the substrate and the membrane, and the step of figure 2h, during which the membrane 30 is deflected.

Thus, with reference to figure 3a, the surface 12 of the membrane is treated prior to its deflection, and, with reference to figure 3c, keeps its structure after it has been deflected.

These processing steps may allow rendering the curved surface superhydrophobic.

Once the curved surface 12 of the inclinometer has been formed, the other components can be assembled to manufacture the inclinometer.

Back to figures 1a and 1b, an embodiment of the inclinometer comprises a light emitter 15, for instance a LED, a microLED or a light bulb, which is preferably adapted to emit light at a wavelength where both the curved surface 12 and the substrate 4 are transparent. In case at least one of the curved surface 12 and the substrate 4 are manufactured in silicon, then the wavelength should correspond to infrared light, preferably between 1 and 1,5 $\mu$m, more preferably in the proximity of, or equal to 1,1 $\mu$m.

According to this embodiment, the mobile element 11 is opaque to the light emitted by the emitter 15, and the curved surface 12 is transparent to said light. This is the case for example when the curved surface is made of silicon and the light is infrared light. The position sensor 13 is then an optical sensor, preferably of the four-quadrant photodetector type. Other types of possible detectors include lateral effect position sensitive detectors, linear position sensor modules, camera equipment such as CCD camera, CMOS camera.

In that embodiment, the curved surface 12 and the mobile element 11 disposed on top of it are positioned between the light emitter 15 and the light receiver.

The light emitted by the emitter 15 passes through the curved surface 12 and reaches the light receiver, unless for the part of light that is interrupted by the opaque mobile element 11.

In other words, the mobile element 11 projects a shadow on the light receiver, the position of the shadow corresponding to the position of the mobile element 11 on the curved surface 12.

The light receiver thus detects the position of the shadow and transmits this position to the data processing module 14, which is adapted to compute the angle of the inclinometer 10 by implementing the equations above.

Alternatively, the mobile element 11 may be transparent, and form a spherical lens that may focus the light from the emitter 15 onto the position sensor, in which case the position sensor will detect the changes in the light projected onto the sensor due to the displacement of the mobile element.

The manufacturing of the inclinometer 10 thus comprises positioning the curved surface between the light emitter and the light receiver, depositing the mobile element 11 on the surface 12, and connecting the light emitter 15 and the light receiver and the external pressure sensor to the data processing module 14 in order to record the data delivered by the light receiver and thus determine the inclination angle through computation.

According to another embodiment of the invention, the position sensor 13 can be electric, for instance of the resistive or capacitive type. In that case, the inclinometer does not comprise a light emitter, and the position sensor 13 is embedded in the membrane 30 or affixed to its surface 12 upon which the element 11 moves.

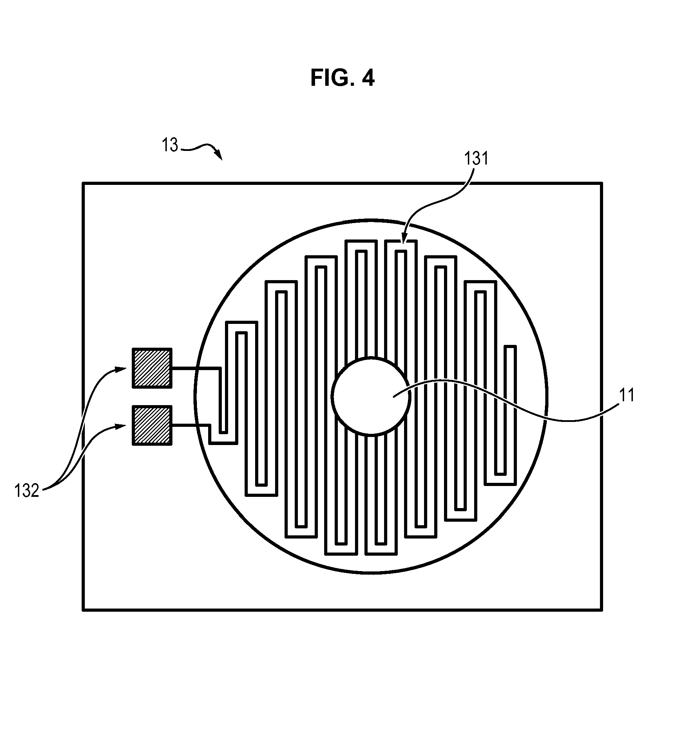

An example of resistive position sensor 13 has been shown in figure 4. This sensor comprises a metallic trace 131 running on the curved surface, and electrodes 132 connected to the trace and adapted to deliver a direct current (DC) to the trace 131.

Depending on the position of the mobile element 11, which in that case is made of an electrically conductive material, the current flows through a varying length of a metallic trace 131, thus causing the value of the resistance measured between the electrodes 132 to change. From the value of the resistance, the position of the element 11 can thus be determined.

Alternatively, and especially in the case where the mobile element is a solid ball having an almost punctual contact with the surface, the position sensor 13 can be capacitive. The same principle is then applied except for the fact that a high frequency alternative current (AC) flows through the trace, and the position of the mobile element 11 causes a change in the capacitance, and thus in the conductance measured between the electrodes.

The manufacturing process of the inclinometer then comprises positioning a sensor on the surface 12 or embedding the sensor within the membrane 30, positioning the mobile element 11 on the surface 12 and connecting the data processing module 14 to the electrodes of the position sensor.

Last, the mobile element can also be damped by immersing the mobile element in a viscous fluid, i.e. filling with viscous fluid the chamber inside which the mobile element is moving. This allows limiting the impact of external vibrations on the inclinometer. The viscosity of the fluid is preferably comprised between 0.1cP and 1000cP, depending on the use of the inclinometer, in order to limit the effect of vibrations on the position of the mobile element.

The inclinometer thus obtained has a curved surface of precisely determined geometry, which allows determining its inclination very precisely thanks to the position of the mobile element on the curved surface.

## Claims

1. An inclinometer (10) comprising:

    - a curved surface (12),
    - a mobile element (11) on said curved surface, such that an inclination of the inclinometer (10) causes a displacement of the mobile element (11) on the curved surface (12), and
- a position sensor (13) adapted to detect a position of said mobile element (11) on said curved surface (12), the inclinometer being **characterized in that** said curved surface (12) is obtained by the deflection of a membrane (30) under exposure to a differential pressure between one side of said membrane and the opposite side of said membrane, said opposite side being exposed to atmospheric pressure.

2. An inclinometer according to claim 1, comprising a cavity (3) on said one side of the membrane (30), within which a pressure is below atmospheric pressure.

3. An inclinometer according to claim 1 or 2, wherein the membrane is essentially consisting of silicon, glass, sapphire, alumina or metal.

4. An inclinometer (10) according to claims 1 to 3, further comprising a data processing module (14) adapted to compute an inclination angle of the said inclinometer (10) from the detected position of the said mobile element (11) on the said curved surface (12) and the atmospheric pressure.

5. An inclinometer (10) according to any of claims 1 to 4, wherein the mobile element (11) is a solid ball, a liquid droplet or a gas bubble.

6. An inclinometer (10) according to claim any of the preceding claims, comprising a light emitter (15), wherein the position sensor (13) comprises a light receiver, the curved surface (12) being transparent to the emitted light and being interposed between the light emitter (15) and the light receiver, and the mobile element (11) being opaque to the emitted light so as to interrupt the light and project a shadow on the light receiver, and wherein the data processing module (14) is configured for determining, from a position of the projected shadow on the light receiver, a position of the mobile element (11) on the curved surface (12) and an inclination angle of the inclinometer (10).

7. An inclinometer (10) according to any of claims 1 to 5, comprising a light emitter (15), wherein the position sensor (13) comprises a light receiver, the curved surface (12) being transparent to the emitted light and being interposed between the light emitter (15) and the light receiver, and the mobile element (11) forming a lens transparent to the emitted light so as to modify the trajectory of light and the pattern of light projected on the light receiver, and wherein the data processing module (14) is configured for determining, from the pattern of light detected on the light receiver, a position of the mobile element (11) on the curved surface (12) and for deducing an inclination angle of the inclinometer (10).

8. An inclinometer (10) according to claim 6 or 7, wherein the light emitter (15) and the light receiver are respectively adapted to emit and detect infrared light.

9. An inclinometer (10) according to any of claims 6 to 8, wherein the light receiver is chosen among group consisting of: a quadrant photodetector type, a lateral effect position sensitive detector, a linear position sensor module, a CCD camera, or a CMOS camera.

10. An inclinometer (10) according to any of claims 1 to 5, wherein the position sensor (13) comprises a resistive position sensor or a capacitive position sensor, and is adapted to electrically detect the position of the mobile element (11) on the curved surface (12).

11. An inclinometer (10) according to any of the preceding claims, further comprising a pressure sensor adapted to measure an atmospheric pressure around the inclinometer.

12. A method of manufacturing an inclinometer according to any of the preceding claims, the method comprising steps of:

- etching (200) a substrate (2) to form a cavity (3) and a membrane (30) in said substrate (2), the membrane (30) having a surface (12),
- bonding (300) a layer (4) over said substrate (2) in order to seal said cavity (3) between the glass layer (4) and the membrane (30) of the etched substrate (2), said bonding being carried out in an apparatus in which the pressure is maintained at a predetermined value below atmospheric pressure, in order to set the pressure within the cavity (3) to said predetermined value, and
- raising the pressure within the bonding apparatus to reach atmospheric pressure, the differential pressure between the cavity and the atmospheric pressure causing the membrane (30) to deflect into the cavity (3).

**13.** The method of manufacturing an inclinometer according to the preceding claim, further comprising a step of structuring said membrane (30) so as to form on its surface (12) an array of structures with dimensions in the range from 10 nanometers to 100 micrometers, said structuring being achieved through the implementation of an etching process, or growth or deposition of a layer of carbon nanotubes.

**14.** The method of manufacturing an inclinometer according to claims 12 or 13, further comprising a step of depositing on the membrane (30) a solid low-surface-energy layer or a low-vapor-pressure liquid layer.

**15.** A method of computing an inclination angle of an inclinometer according to any of claims 1 to 11, comprising the steps of:

- assessing the atmospheric pressure around the inclinometer,
- determining the geometry of the curved surface (12) according to said atmospheric pressure,
- detecting the position of the mobile element (11) on the curved surface (12), and
- inferring, from said position and said geometry of the curved surface (12), an inclination angle of the inclinometer (10).

**FIG. 1a**

EP 2 846 131 A1

FIG. 1b

FIG. 1c

EP 2 846 131 A1

## FIG. 2a

## FIG. 2b

## FIG. 2c

## FIG. 2d

## FIG. 2e

## FIG. 2f

## FIG. 2g

## FIG. 2h

## FIG. 3a

## FIG. 3b

## FIG. 3c

FIG. 4

Europäisches
Patentamt

European
Patent Office

Office européen
des brevets

# EUROPEAN SEARCH REPORT

Application Number

EP 13 30 6223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | JP 2011 069798 A (UNIV WASEDA; KAJIMA CORP) 7 April 2011 (2011-04-07) * abstract; figures 1,2 * | 1-15 | INV. G01C9/10 |
| A | EP 1 363 105 A2 (DELPHI TECH INC [US]) 19 November 2003 (2003-11-19) * the whole document * | 1,12,15 | ADD. G01C9/06 G01C9/24 |
| A | JP 2000 065569 A (TOKAI RIKA CO LTD) 3 March 2000 (2000-03-03) * the whole document * | 1,12,15 | |
| A | JP H04 258713 A (OMRON TATEISI ELECTRONICS CO) 14 September 1992 (1992-09-14) * the whole document * | 1,12,15 | |

TECHNICAL FIELDS
SEARCHED      (IPC)

G01C
G01L

The present search report has been drawn up for all claims

| Place of search | Date of completion of the search | Examiner |
|---|---|---|
| The Hague | 8 January 2014 | van Doornum, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 30 6223

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2014

| Patent document cited in search report | | Publication date | Patent family member(s) | Publication date |
|---|---|---|---|---|
| JP 2011069798 | A | 07-04-2011 | NONE | |
| EP 1363105 | A2 | 19-11-2003 | NONE | |
| JP 2000065569 | A | 03-03-2000 | NONE | |
| JP H04258713 | A | 14-09-1992 | NONE | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0809786 A
- JP 2011069798 A
- JP 2006317171 A

**Non-patent literature cited in the description**

- **W.C.YOUNG ; R.G. BUDYNAS ; A.M. SADEGH.** Roark's formulas for stress and strain. McGraw Hill, 2012